# EUROPÄISCHE PATENTSCHRIFT

(11) **EP 3 030 438 B1**
(45) Veröffentlichungstag und Bekanntmachung des Hinweises auf die Patenterteilung: **29.11.2017**
(21) Anmeldenummer: 14741582.2
(22) Anmeldetag: 17.07.2014
(51) Int. Cl.: H01M 2/10

(54) **VORRICHTUNG ZUR AUFNAHME ZUMINDEST EINES ENERGIEMODULS FÜR EIN KRAFTFAHRZEUG**
DEVICE FOR ACCOMODATING AT LEAST ONE ENERGY MODULE FOR A MOTOR VEHICLE
DISPOSITIF POUR PRISE D'AU MOINS UN MODULE D'ENERGIE POUR UN VEHICULE A MOTEUR

(30) Priorität: 06.08.2013 DE 102013215436
(43) Veröffentlichungstag der Anmeldung: 15.06.2016
(73) Patentinhaber: Bayerische Motoren Werke Aktiengesellschaft, 80809 München (DE)
(72) Erfinder: KLAUS, Christoph, 85764 Oberschleissheim (DE); WAGNER, Daniel, 80337 München (DE); STAACK, Holger, 82402 Seeshaupt (DE)
(86) Internationale Anmeldenummer: PCT/EP2014/065346
(87) Internationale Veröffentlichungsnummer: WO 2015/018618

(56) Entgegenhaltungen:
- WO-A1-2014/183995
- DE-A1-102009 040 197
- DE-A1-102012 108 816
- JP-A- 2007 331 669

## Beschreibung

Die vorliegende Erfindung betrifft eine Vorrichtung zur Aufnahme zumindest eines Energiemoduls für ein Kraftfahrzeug, insbesondere zur Aufnahme zumindest eines Hochvoltenergiemoduls für ein Hybrid- oder Elektrofahrzeug.

Weiterhin betrifft die Erfindung ein Fahrzeug mit einer solchen Vorrichtung.

Derartige Vorrichtungen zur Aufnahme von einem oder mehreren Energiemodulen, wie beispielsweise Energiespeichermodule oder Energiewandlermodule, sind im fertig im Kraftfahrzeug montierten Zustand weitläufig als Energiespeicher bzw. Energiespeichervorrichtungen bekannt.

Die Energiemodule werden meist durch miteinander gekoppelte Energiezellen ausgebildet.

Beispiele für als Energiespeichermodule ausgebildete Energiemodule können Anordnungen aus mehreren Batteriezellen sein, zum Beispiel elektrische Batterien aus elektrochemischen Speicherzellen, wie etwa Lithium-Ionen-Speicherzellen, Doppelschichtkondensatoren, etc. Ein Beispiel für ein als Energiewandlermodul ausgebildetes Energiemodul ist ein Brennstoffzellenstapel, welcher eine Reihe von miteinander gekoppelten Brennstoffzellen aufweist. Die einzelnen Zellen können beispielsweise zu Modulen verpresst werden, welche an dem Gehäuse angeschraubt werden können.

In der Regel werden derartige Vorrichtungen unter anderem zur Aufnahme von Energiemodulen im Zusammenhang mit beispielsweise Hybrid- oder Elektrofahrzeugen eingesetzt. Zu diesem Zweck umfassen herkömmliche Vorrichtungen üblicherweise ein strukturfestes Gehäuse, welches einen Gehäuseunterteil und einen Gehäusedeckel aufweist, die mittels Schrauben verbunden sind, und welches die Energiemodule umschließt. Weiterhin sind am Gehäuse üblicherweise Anbringungsabschnitte vorgesehen, über welche das Gehäuse mit fahrzeugaufbauseitig bzw. fahrzeugkarosserieseitig angeordneten Elementen bzw. Bauteilen zur Halterung des Gehäuses mit dem Fahrzeug verbunden werden kann.

Das Gehäuse einer solchen herkömmlichen Vorrichtung nimmt einerseits alle von außen einwirkenden Kräfte, wie beispielsweise bei einem Unfall bzw. Zusammenstoß oder im Kraftfahrzeug auftretende Schwingungen, etc. auf. Andererseits schützt das Gehäuse die Energiemodule auch gegen äußere Umwelteinflüsse, wie etwa vor dem Eindringen von Wasser in das Gehäuse. Hierzu sind zwischen dem Gehäuseunterteil und dem Gehäusedeckel angeordnete Dichtungen vorgesehen, die auch ein Austreten eines Elektrolyten, welcher in den Energiemodulen vorhanden ist, aus dem Gehäuse verhindern; dies ist unter sicherheitstechnischen Gesichtspunkten umso bedeutender, als sich der Elektrolyt bei Austritt entzünden und somit zum Brand des Fahrzeugs führen könnte.

Insbesondere im Bauraum des Kraftstofftanks wird eine zweigeteilte Vorrichtung zur Aufnahme der Energiemodule verwendet, welche einen ersten und einen zweiten Aufnahmeabschnitt zur Aufnahme der Energiemodule aufweist, die mittels eines über der Abgasanlage und der Gelenk- bzw. Antriebswelle angeordneten Verbindungsabschnitts bzw. einer Brücke verbunden sind.

Im Falle eines Unfalls, bei dem ein Aufprall von einer seitlichen Richtung auf eine Längsseite des Fahrzeugs erfolgt, nehmen beispielsweise Energieabsorptionselemente und andere Bauteile wie etwa ein Längsträger des Fahrzeugs zunächst die von außen einwirkende Kraft unter elastischer und/oder plastischer Deformierung auf und leiten zumindest Teile der von außen einwirkenden Kraft auf die Vorrichtung zur Aufnahme der Energiemodule weiter, wodurch die Vorrichtung im Bereich des Verbindungsabschnitts bzw. im Brückenbereich aufgrund einer Hebelkraft einknicken bzw. deformiert werden kann.

Um Beschädigungen der Energiemodule bei einer von außen auf das Gehäuse einwirkenden Kraft zu vermeiden, wird das Gehäuse üblicherweise aus einem steifen Metallmaterial wie etwa Stahl bzw. Stahlblechen oder Aluminium gefertigt und in letzterem Fall beispielsweise mittels eines Aluminiumdruckgussverfahrens als massives Bauteil hergestellt. Die Masse des Gehäuses stellt neben der Masse des einen oder der mehreren Energiemodule aber gerade den größten Anteil des Gesamtgewichts der Vorrichtung dar.

Dies hat zur Folge, dass das hohe Gewicht der Vorrichtung die Leistungsfähigkeit des Kraftfahrzeugs verringert und den Energiebedarf des Kraftfahrzeugs erhöht.

Eine Vorrichtung gemäß Oberbegriff des Patentanspruches 1 ist aus dem Dokument DE 10 2012 108 816 A1 bekannt.

Der Erfindung liegt daher die Aufgabe zugrunde, eine Vorrichtung zur Aufnahme zumindest eines Energiemoduls zu schaffen, mit der die Energiemodule im Falle eines Unfalls vor Beschädigungen geschützt werden und gleichzeitig eine Gewichtsersparnis erzielt werden kann.

Diese Aufgabe wird durch die Merkmale des Patentanspruchs 1 gelöst.

Vorteilhafte Ausgestaltungen und Weiterbildungen der Erfindung ergeben sich aus den abhängigen Ansprüchen.

Eine Vorrichtung gemäß einem Aspekt der Erfindung ist zur Aufnahme zumindest eines Energiemoduls für ein Kraftfahrzeug, insbesondere zur Aufnahme zumindest eines Hochvoltenergiemoduls für ein Hybrid- oder Elektrofahrzeug, vorgesehen, wobei die Vorrichtung ein Gehäuse mit einem ersten und einem zweiten Aufnahmeabschnitt zur Aufnahme zumindest eines Energiemoduls, und einen zwischen dem ersten und dem zweiten Aufnahmeabschnitt angeordneten Verbindungsabschnitt aufweist, und der Verbindungsabschnitt derart ausgelegt ist, dass der Verbindungsabschnitt bei Aufbringung einer vorbestimmten Kraft auf das Gehäuse unter Verformung eine vorgegebene von der Verformung resultierende Relativbewegung zwischen dem ersten und dem zweiten Aufnahmeabschnitt zulässt.

Dadurch können beispielsweise die bei einem Crash bzw. Unfall (zum Beispiel bei einem Front-, Heck- oder Seitencrash) auftretenden Betriebs- oder Crashlasten bzw. -beanspruchungen gezielt von dem Verbindungsabschnitt aufgenommen werden, während die Funktion der Abdichtung des zumindest einen Energiemoduls bzw. der Abschirmung des zumindest einen Energiemoduls von äußeren Umgebungseinflüssen im Bereich der Aufnahmeabschnitte zumindest zeitweise aufrechterhalten werden kann.

Ein erformungswiderstand der Aufnahmeabschnitte und ein Verformungswiderstand des Verbindungsabschnitts können so gewählt sind, dass sich der Verbindungsabschnitt bei Aufbringung einer vorbestimmten Kraft innerhalb eines vorgegebenen Kräftebereichs verformt, während der als Folge von der Verformung des Verbindungsabschnitts bewegte Aufnahmeabschnitt keine oder nahezu keine plastische Verformung erfährt.

Demzufolge kann der Verbindungsabschnitt einen geringeren Verformungswiderstand, insbesondere einen geringeren Verformungswiderstand hinsichtlich plastischer Deformation, als die Aufnahmeabschnitte aufweisen. Weiterhin kann der Verbindungsabschnitt eine geringere Steifigkeit als die Aufnahmeabschnitte aufweisen.

Dazu kann eine Wandstärke des Verbindungsabschnitts kleiner als eine Wandstärke des zumindest einen Aufnahmeabschnitts gewählt werden.

Zusätzlich oder alternativ dazu können der Verbindungsabschnitt und die Aufnahmeabschnitte aus unterschiedlichen Materialien gebildet werden. Beispielsweise kann der Verbindungsabschnitt Polypropylen umfassen, und die Aufnahmeabschnitte faserverstärktes Polyamid umfassen.

Die erfindungsgemäße Vorrichtung ist in vorteilhafter Weise derart weitergebildet, dass das Gehäuse einen Gehäuseunterteil und einen Gehäüsedeckel aufweist, und der Verbindungsabschnitt einen Verbindungsabschnitt des Gehäuseunterteils und einen Verbindungsabschnitt des Gehäusedeckels mit jeweiligen Endabschnitten umfasst, welche mittels einer lösbaren Klemme flächig aufeinander gepresst werden.

Der Verbindungsabschnitt des Gehäuseunterteils und/oder der der Verbindungsabschnitt des Gehäusedeckels kann zumindest eine Abschrägung aufweisen, die derart ausgebildet ist, dass ein Ende der Klemme bei einer Relativbewegung eines Aufnahmeabschnitts ausgewählt aus dem ersten und dem zweiten Aufnahmeabschnitt in Richtung des anderen ausgewählt aus dem ersten und dem zweiten Aufnahmeabschnitt in Kontakt mit der Abschrägung gelangt und bei Erreichen eines vorgegebenen Abstands zwischen den beiden Aufnahmeabschnitten die Klemme mittels einer von der Abschrägung ausgeübten Kraft gelöst wird.

Bevorzugt ist die Klemme mittels einer Einrastvörrichtung am Verbindungsabschnitt des Gehäuses befestigt ist, wobei der Verbindungsabschnitt des Gehäusedeckels und/oder des Gehäuseunterteils eines ausgewählt aus einer Einrastnase und einer Einrastnut, und die Klemme das andere ausgewählt aus der Einrastnase und der Einrastnut aufweist, und die Einrastnase in der Einrastnut eingerastet ist.

Das erfindungsgemäße Fahrzeug, insbesondere Kraftfahrzeug, vorzugsweise Hybrid- oder Elektrofahrzeug, umfasst die vorstehende beschriebene erfindungsgemäße Vorrichtung.

Eine bevorzuge Ausführungsform der Erfindung wird nachfolgend anhand der Figuren beispielhaft erläutert.

Es zeigen:
Fig. 1 eine Darstellung einer erfindungsgemäßen Vorrichtung zur Aufnahme von Energiemodulen für ein Kraftfahrzeug in einer perspektivischen Ansicht;
Fig. 2 eine vergrößerte Darstellung eines mittleren Bereichs der in Fig. 1 gezeigten Vorrichtung;
Fig. 3 eine Darstellung der erfindungsgemäßen Vorrichtung von Fig. 1 in einer Draufsicht;
Fig. 4 eine Schnittansicht des mittleren Bereichs der Vorrichtung;
Fig. 5 eine perspektivische Ansicht einer in den Fig. 1 bis 4 darstellten Klemme; und
Fig. 6 eine Querschnittsansicht der in Fig. 5 gezeigten Klemme.

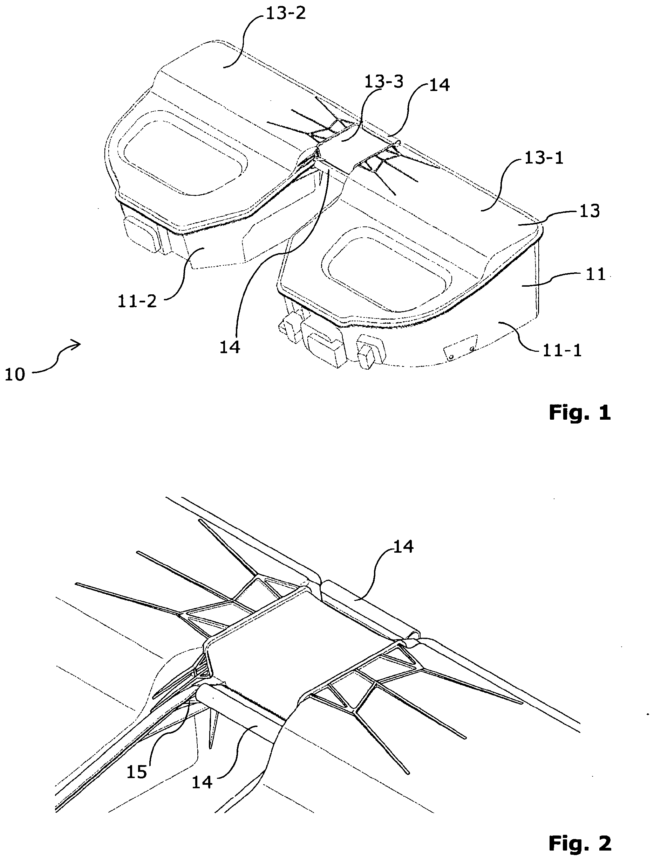

Fig. 1 zeigt eine Darstellung einer erfindungsgemäßen Vorrichtung 10 zur Aufnahme von Energiemodulen (nicht gezeigt), beispielsweise Energiespeichermodulen und/oder Energiewandlermodulen, für ein Kraftfahrzeug in einer perspektivischen Ansicht. Die Vorrichtung 10 kann beispielsweise zur Aufnahme von sechs Energiemodulen, die jeweils durch Hochvoltenergiemodule gebildet werden, für ein Hybrid-oder Elektrofahrzeug vorgesehen sein. Bei anderen Ausführungsformen kann die Vorrichtung 10 auch zur Aufnahme einer beliebigen Anzahl von Energiemodulen vorgesehen sein, soweit dies die Bauraumverhältnisse im jeweiligen Kraftfahrzeug zulassen. Jedes Energiemodul kann mehrere miteinander gekoppelte Energiezellen umfassen. Beispielsweise können die Energiemodule durch eine Anordnung aus einer oder mehreren Batteriezellen wie zum Beispiel elektrochemische Speicherzellen wie etwa Lithium-Ionen-Speicherzellen, Doppelschichtkondensatoren, Brennstoffzellen, etc. gebildet werden.

Die Vorrichtung 10 umfasst ein Gehäuse 11, 13 welches ein Gehäuseunterteil 11 sowie einen Gehäusedeckel bzw. ein Gehäuseoberteil 13 aufweist. Bevorzugt sind sowohl das Gehäuseunterteil 11 als auch das Gehäuseoberteil 13 einstückig ausgebildet. Ein erster bzw. bzgl. einer Vorwärtsrichtung des Kraftfahrzeugs rechter Aufnahmeabschnitt 11-1 und ein zweiter bzw. linker Aufnahmeabschnitt 11-2 des Gehäuseunterteils 11 sind zur Aufnahme der Energiemodule ausgelegt, wobei die Energiemodule beispielsweise mit dem Gehäuse 11, 13 verschraubt, oder an einer in dem Gehäuse 11, 13 angeordneten Halterung befestigt sein können. Der Gehäusedeckel bzw. das Gehäuseoberteil 13 weist entsprechende erste und zweite Aufnahmeabschnitte 13-1, 13-2 auf, welche entsprechend den ersten bzw. zweiten Aufnahmeabschnitt 11-1, 11-2 des Gehäuseunterteils 11 bedecken.

Der erste Aufnahmeabschnitt 11-1 des Gehäuseunterteils 11 bildet zusammen mit dem ersten Aufnahmeabschnitt 13-1 des Gehäusedeckels 13 einen ersten Aufnahmeabschnitt des Gehäuses 11, 13 aus, währende der zweite Aufnahmeabschnitt 11-2 des Gehäuseunterteils 11 zusammen mit dem zweiten Aufnahmeabschnitt 13-2 des Gehäusedeckels 13 einen zweiten Aufnahmeabschnitt des Gehäuses 11, 13 ausbildet.

Der erste und der zweite Aufnahmeabschnitt 11-1, 11-2 des Gehäuseunterteils 11 sind über einen Verbindungsabschnitt 11-3 des Gehäuseunterteils 11, der dazu vorgesehen sind, über einem Mitteltunnel eines Kraftfahrzeugs, in dem eine Abgasanlage und eine Gelenk- bzw. Antriebswelle des Kraftfahrzeugs vorgesehen sein können, angeordnet zu werden, verbunden, so dass der erste und der zweite Aufnahmeabschnitt 11-1, 11-2 des Gehäuseunterteils 11 dazu vorgesehen sind, jeweils in Querrichtung des Kraftfahrzeugs seitlich neben dem Mitteltunnel angeordnet zu werden.

Der erste und der zweite Aufnahmeabschnitt 13-1, 13-2 des Gehäusedeckels 13 sind ebenfalls über einen Verbindungsabschnitt 13-3 des Gehäusedeckels 13 verbunden, der dazu vorgesehen ist, über dem Verbindungsabschnitt 11-3 des Gehäuseunterteils 11 und somit auch über dem Mitteltunnel angeordnet zu werden.

Der Verbindungsabschnitt 11-3 des Gehäuseunterteils 11 bildet zusammen mit dem Verbindungsabschnitt 13-3 des Gehäusedeckels 13 einen Verbindungsabschnitt des Gehäuses 11, 13.

Bevorzugt ist das Gehäuse 11, 13 derart ausgelegt, dass es beabstandet von dem Mitteltunnel angeordnet werden kann, um die Übertragung von Vibrationen von der Gelenk- bzw. Antriebswelle auf das Gehäuse zu vermeiden oder zumindest zu verringern. Des Weiteren können zum Schutz des Gehäuses 11, 13 vor der von der Abgasanlage abgestrahlten Wärme Wärmeschutzbleche zwischen der Abgasanlage und dem Gehäuse 11, 13 vorgesehen werden und/oder als Material des Gehäuses 11, 13 ein entsprechend hitzebeständiges Material verwendet werden.

Das Gehäuse 11, 13 kann über nicht dargestellte Anbringungsabschnitte fahrzeugaufbauseitig bzw. fahrzeugkarosserieseitig verbunden und damit gehaltert werden.

In besonders vorteilhafter Weise ist der Verbindungsabschnitt 11-3, 13-3 des Gehäuses 11, 13 derart ausgelegt, dass der Verbindungsabschnitt 11-3, 13-3 des Gehäuses 11, 13 bei Aufbringung einer vorbestimmten Kraft innerhalb eines vorbestimmten Kräftebereichs auf das Gehäuse 11, 13 unter Verformung, vorzugsweise plastischer Verformung, eine vorgegebene von der Verformung resultierende Relativbewegung zwischen den ersten und zweiten Aufnahmeabschnitten 11-1, 11-2, 13-1, 13-2 des Gehäuses 11, 13 zulassen.

Insbesondere ist das Gehäuse 11, 13 derart ausgebildet, dass der Verbindungsabschnitt 11-3, 13-3 des Gehäuses 11, 13 bei Aufbringung einer vorbestimmten in Fahrzeugquerrichtung wirkenden Kraft auf das Gehäuse 11, 13 eine von der Verformung resultierende Relativbewegung derjenigen Aufnahmeabschnitte 11-1, 11-2, 13-1, 13-2 des Gehäuseunterteils 11 und des Gehäusedeckels 13, die näher an dem Angriffspunkt der Kraft angeordnet sind, in Richtung der jeweiligen anderen Aufnahmeabschnitte des Gehäuseunterteils 11 und des Gehäusedeckels 13 zulässt; beispielsweise dann, wenn eine externe in Richtung Fahrzeugmitte gerichtete bzw. wirkende Kraft in Fahrzeugquerrichtung auf das Kraftfahrzeug einwirkt, welche bei einem Unfall, wie einem seitlichen Aufprall bzw. Seitencrash, auftreten kann.

Zur Energieabsorption sind die Verbindungsabschnitte 11-3, 13-3 eingerichtet, bei Aufbringung einer vorbestimmten Kraft auf das Gehäuse unter plastischer Verformung als Energieabsorptionselemente zu wirken. Dabei können die Verbindungsabschnitte 11-3, 13-3 derart ausgelegt sein, dass sie den größten Teil der aus der Kraftaufbringung resultierenden Energie oder sämtliche aus der Kraftaufbringung resultierende Energie aufnehmen oder alternativ bei Aufbringung einer Kraft auf das Gehäuse 11, 13 unter plastischer und/oder elastischer Verformung die Bewegung der jeweiligen Aufnahmeabschnitte 11-1, 11-2, 13-1, 13-2 des Gehäuseunterteils 11 und des Gehäusedeckels 13 in Richtung eines fahrzeugaufbauseitigen Energieabsorptionselements bewirken, welches zusammen mit der die Aufnahmeabschnitte 11-1, 11-2, 13-1, 13-2 des Gehäuseunterteils 11 und des Gehäusedeckels 13 umgebenden Fahrzeugstruktur den größten Teil der aus der Kraftaufbringung resultierenden Energie aufnimmt. In diesem Fall kann das fahrzeugaufbauseitige Energieabsorptionselement beispielsweise durch den Mitteltunnel des Fahrzeugs sowie darunter liegender Bauteile bzw. Elemente ausgebildet werden.

In beiden Fällen sind die Verformungswiderstände der Aufnahmeabschnitte 11-1, 11-2, 13-1, 13-2 des Gehäuseunterteils 11 und des Gehäusedeckels 13 und die Verformungswiderstände der Verbindungsabschnitte 11-3, 13-3 des Gehäuseunterteils 11 und des Gehäusedeckels 13 so gewählt, dass sich die Verbindungsabschnitte 11-3, 13-3 des Gehäuseunterteils 11 und des Gehäusedeckels 13 bei Aufbringung einer vorbestimmten Kraft innerhalb des vorgegebenen Kräftebereichs verformen, während die Aufnahmeabschnitte 11-1, 11-2, 13-1, 13-2 des Gehäuseunterteils 11 und des Gehäusedeckels 13 bei gleicher oder nahezu gleicher Beanspruchung keine oder nahezu keine plastische Verformung erfahren.

Auf diese Weise können sich bei einer Krafteinwirkung auf eine Längsseite des Kraftfahrzeugs, wie sie etwa bei einem Aufprall der Längsseite auf einen Pfahl in Folge eines Schleuderns des Kraftfahrzeugs oder einem Unfall bzw. einem Zusammenstoß mit einem anderen Fahrzeug, das beispielsweise auf die linke oder die rechte Längsseite des Kraftfahrzeugs aufprallt, auftritt, die jeweiligen linken bzw. rechten Aufnahmeabschnitte 11-1, 11-2, 13-1, 13-2 des Gehäuseunterteils 11 und des Gehäusedeckels 13, auf die die von außen einwirkende Kraft über andere Bauteile des Kraftfahrzeugs übertragen wird, relativ zu den jeweiligen anderen Aufnahmeabschnitten 11-1, 11-2, 13-1, 13-2 des Gehäuseunterteils 11 und des Gehäusedeckels 13 verschieben, d.h. sich auf die anderen Aufnahmeabschnitte 11-1, 11-2, 13-1, 13-2 des Gehäuseunterteils 11 und des Gehäusedeckels 13 zu bewegen, indem die Verbindungsabschnitte 11-3, 13-3 des Gehäuseunterteils 11 und des Gehäusedeckels 13 zunächst elastisch und dann ggf. plastisch verformt werden, während die Aufnahmeabschnitte 11-1, 11-2, 13-1, 13-2 noch keine oder nahezu keine plastische Verformung erfahren.

Dadurch wird zusätzliche Energie über die umliegenden Karosseriebauteile abgebaut, und die Aufnahmeabschnitte 11-1, 11-2, 13-1, 13-2 des Gehäuseunterteils 11 und des Gehäusedeckels 13 erst deutlich später in die Energieabsorption eingebunden. Mit anderen Worten wird durch die erfindungsgemäße Ausgestaltung des Gehäuses 11, 13 das auf die Aufnahmeabschnitte 11-1, 11-2, 13-1, 13-2 des Gehäuseunterteils 11 und des Gehäusedeckels 13 wirkende Kraftniveau sowie die von diesen aufzunehmende Energie wesentlich reduziert. Auf diese Weise wird die Gefahr eines Eindringens von Gegenständen in das Gehäuse 11, 13 und somit die Gefahr einer Beschädigung der aufgenommenen Energiemodule und eines Austretens des Elektrolyten vermindert.

Der unterschiedliche Verformungswiderstand, insbesondere die Steifigkeit, kann beispielsweise durch den Einsatz von unterschiedlichen Werkstoffen für die Aufnahmeabschnitte 11-1, 11-2, 13-1, 13-2 und die Verbindungsabschnitte 11-3, 13-3 und/oder über die Festlegung unterschiedlicher Wandstärken für die Aufnahmeabschnitte 11-1, 11-2, 13-1, 13-2 und die Verbindungsabschnitte 11-3, 13-3 erreicht werden. Beispielsweise können als Material für das Gehäuse 11, 13 Kunststoffe verwendet werden, wobei für die Verbindungsabschnitte 11-3,13-3 Polypropylen, und für die Aufnahmeabschnitte 11-1, 11-2, 13-1, 13-2 Polyamid mit 30% Glasfaserverstärkung gewählt werden können.

Um eine gezielte Deformation der Verbindungsabschnitte 11-3, 13-3 im Falle eines Einwirkens einer Kraft auf das Gehäuse 11, 13 zu erreichen, sind die Verbindungsabschnitte 11-3, 13-3 des Gehäuseunterteils 11 und des Gehäusedeckels 13 mittels einer lösbaren Klemme 14 verbunden, die die Verbindungsabschnitte 11-3, 13-3 des Gehäuseunterteils 11 und des Gehäusedeckels 13 lösbar verpresst, während die Aufnahmeabschnitte 11-1, 11-2, 13-1, 13-2 des Gehäuseunterteils 11 und des Gehäusedeckels 13 mittels Schrauben verbunden werden können.

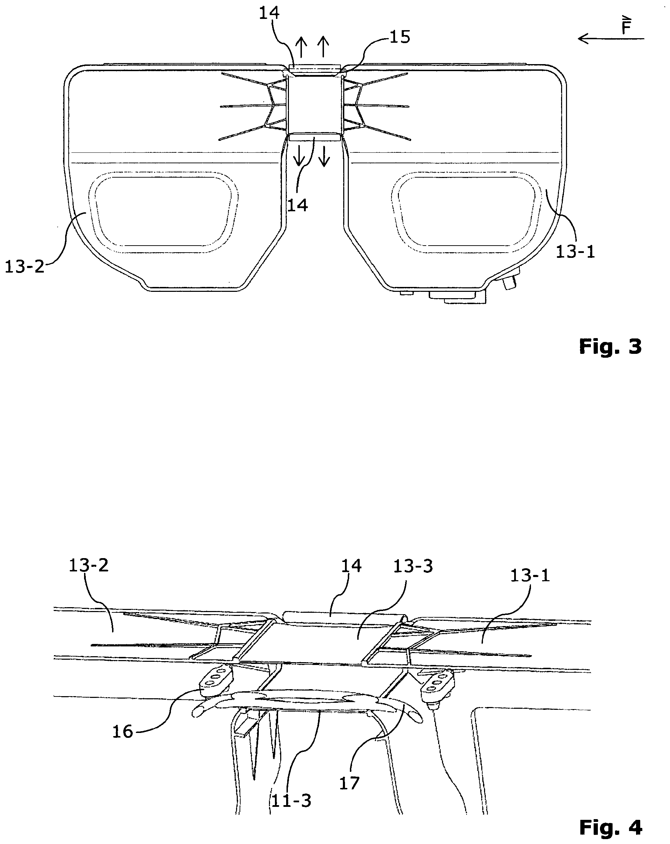

Damit sich die Klemme 14 im Falle einer seitlichen Krafteinwirkung, beispielsweise wie in Fig. 3 gezeigt, bei einer Einwirkung einer in Fahrzeugquerrichtung wirkenden Kraft F auf die Aufnahmeabschnitte 11-1, 13-1 des Gehäuseunterteils 11 und des Gehäusedeckels 13 löst, weist der Verbindungsabschnitt 11-3 des Gehäuseunterteils 11 und/oder der Verbindungsabschnitt 13- 3 des Gehäuseoberteils 13, wie in den Fig. 2 und 3 gezeigt, eine Abschrägung 15 auf. Die Abschrägung 15 bewirkt, dass im Falle, dass sich die Aufnahmeabschnitte 11-1, 11-2, 13-1, 13-2 aufeinander zubewegen, eine Kraft in Fahrzeuglängsrichtung (siehe kurze Pfeile in Fig. 3) auf die Klemme 14 wirkt, wodurch diese in Richtung der Fahrzeuglängsrichtung gedrückt und abgelöst wird. Insbesondere ist die Abschrägung 15 derart ausgeführt, dass ein stirnseitiges Ende der Klemme 15 bei einer Relativbewegung eines der Aufnahmeabschnitte 11-1, 11-2, 13-1, 13-2 des Gehäuses 11, 13 in Richtung des anderen Aufnahmeabschnittes 11-1, 11-2, 13-1, 13-2 des Gehäuses 11, 13 in Kontakt mit der Abschrägung 15 gelangt, bei weiterer Bewegung an dieser entlang gleitet und bei Erreichen eines vorgegebenen Abstands zwischen dem ersten und dem zweiten Aufnahmeabschnitt 11-1, 11-2, 13-1, 13-2 des Gehäuses 11, 13 die Klemme 15 von dem Gehäuse 11, 13 gelöst wird.

Auf diese Weise kann eine weitere Reduzierung des Kraftniveaus in den Aufnahmeabschnitten 11-1, 11-2, 13-1, 13-2 des Gehäuses erreicht werden, da sich die Verbindungsabschnitte 11-3, 13-3 des Gehäuseunterteils 11 und des Gehäuseoberteils 13 bei gelöster Klemme 15 voneinander wegbewegen können bzw. sowohl der Verbindungsabschnitt 11-3 des Gehäuseunterteils 11 als auch der Verbindungsabschnitt 13-3 des Gehäuseoberteil 13 aufgefaltet werden können. Durch dieses niedrigere Kraftniveau kann Material und damit Gewicht (ca. 8 kg im Vergleich zu einem Aluminiumgehäuse), Kosten und Bauraum an der Struktur gespart werden. Des Weiteren wird hierdurch der Einsatz anderer Werkstoffe als Aluminium möglich, die für eine niedrigere Traglast geeignet sind. In anderen freien Bauräumen des Fahrzeugs können weitere Deformationselemente genutzt werden, die einerseits Energie absorbieren und andererseits eine Verschiebung der Aufnahmeabschnitte 11-1, 11-2, 13-1, 13-2 des Gehäuseunterteils 11 bzw. des Gehäusedeckels 13 zueinander unterstützen.

Wie in Fig. 4 gezeigt, sind die in den Aufnahmeabschnitten 11-1, 11-2 des Gehäuseunterteils 11 angeordneten Energiemodule über Leitungen 17, wie etwa elektrischen Leitungen oder Kühlleitungen zur Kühlung der Energiemodule verbunden. Bevorzugt verlaufen die Leitungen in den Verbindungsabschnitten 11-3, 13-3 mäanderförmig bzw. omegaförmig, da diese Formen im Vergleich zu einer geradlinigen Ausführung der Leitungen verformungstoleranter sind, wodurch eine Gefahr einer Beschädigung der Leitungen im Falle einer Verformung der Verbindungsabschnitte 11-3, 13-3 verringert wird. Bei einer Ausführungsform können die Kühlleitungen im Bereich der Verbindungsabschnitte 11-3, 13-3 auch als Schläuche ausgeführt sein, welche ebenfalls bis zu einem gewissen Grad verformungstolerant sind. Zur Festlegung der Lage der Leitungen in den Aufnahmeabschnitten 12 können die Leitungen 17 über am Gehäuse 11, 13 befestigte Verbindungselemente 16 an in Richtung der Energiemodule verlaufende Leitungen angeschlossen werden.

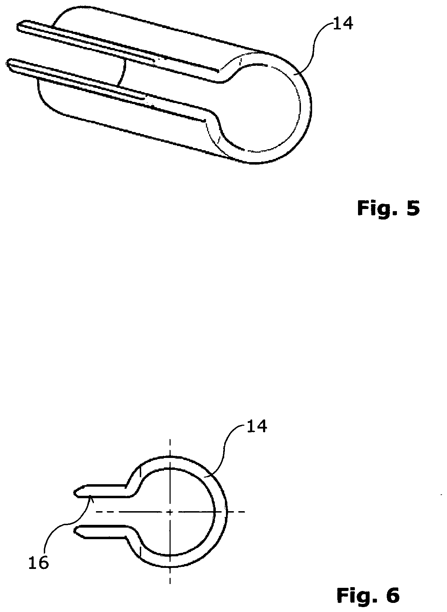

Die in den Fig. 5 und 6 dargestellte Klemme 14 ist anhand ihrer Form und/oder anhand des dafür verwendeten Materials dafür ausgelegt, die für die Abdichtung des Gehäuses erforderliche Kraft bereitstellen zu können. Beispielsweise kann die Klemme 14 aus glasfaserverstärktem Kunststoff oder aus einem Federstahl gebildet sein. An den an den Verbindungsabschnitten 11-3, 13-3 des Gehäuseunterteils bzw. dem Gehäusedeckels anliegenden Flächen 16 der Klemme 14 können Einrastnasen (nicht gezeigt) vorgesehen sein, welche in entsprechende, an Endabschnitten der Verbindungsabschnitte 11-3, 13-3 Gehäuseunterteils 11 bzw. Gehäusedeckels 13 vorgesehene Nuten einrasten, um ein unbeabsichtigtes Lösen der Klemme 14, beispielsweise als Folge von auftretenden Vibrationen, zu verhindern.

## Patentansprüche

1. Vorrichtung (10) zur Aufnahme zumindest eines Energiemoduls für ein Kraftfahrzeug, insbesondere zur Aufnahme zumindest eines Hochvoltenergiemoduls für ein Hybrid- oder Elektrofahrzeug, umfassend
ein Gehäuse (11, 13) mit einem ersten und einem zweiten Aufnahmeabschnitt (11-1, 13-1; 11-2, 13-2) zur Aufnahme zumindest eines Energiemoduls, wobei das Energiemodul derart aufnehmbar ist, dass es vor äußeren Umgebungseinflüssen abgeschirmt ist,
**dadurch gekennzeichnet, dass**
das Gehäuse (11, 13) einen Gehäuseunterteil (11), einen Gehäusedeckel (13) und einen Verbindungsabschnitt (11-3, 13-3) aufweist, wobei
der Verbindungsabschnitt (11-3, 13-3) den ersten und zweiten Aufnahmeabschnitt (11-1, 13-1; 11-2, 13-2) miteinander verbindet,
der Verbindungsabschnitt (11-3, 13-3) einen Verbindungsabschnitt (11-3) des Gehäuseunterteils (11) und einen Verbindungsabschnitt (13-3) des Gehäusedeckels (13) mit jeweiligen Endabschnitten umfasst, welche mittels einer lösbaren Klemme (14) flächig aufeinander gepresst werden, und
der Verbindungsabschnitt (11-3, 13-3) derart ausgelegt ist, dass
i. er über einem Mitteltunnel des Kraftfahrzeuges angeordnet werden kann, und
ii. er bei Aufbringung einer vorbestimmten Kraft auf das Gehäuse unter Verformung eine vorgegebene von der Verformung resultierende Relativbewegung zwischen dem ersten und dem zweiten Aufnahmeabschnitt (11-1, 13-1; 11-2, 13-2) zulässt.

2. Vorrichtung (10) nach Anspruch 1, bei der ein Verformungswiderstand der Aufnahmeabschnitte (11-1, 13-1; 11-2, 13-2) und ein Verformungswiderstand des Verbindungsabschnitts (11-3, 13-3) so gewählt sind, dass sich der Verbindungsabschnitt (11-3, 13-3) bei Aufbringung einer vorbestimmten Kraft innerhalb eines vorgegebenen Kräftebereichs verformt, während der als Folge von der Verformung des Verbindungsabschnitts (12) bewegte Aufnahmeabschnitt keine oder nahezu keine plastische Verformung erfährt.

3. Vorrichtung (10) nach Anspruch 1 oder 2, bei der der Verbindungsabschnitt (11-3, 13-3) eine geringere Steifigkeit als der erste und der zweite Aufnahmeabschnitt (11-1, 13-1; 11-2, 13-2) aufweist.

4. Vorrichtung nach einem der Ansprüche 1 bis 3, bei der eine Wandstärke des Verbindungsabschnitts (11-3, 13-3) kleiner als eine Wandstärke des zumindest einen Aufnahmeabschnitts (11-1, 13-1; 11-2, 13-2) ist.

5. Vorrichtung nach einem der Ansprüche 1 bis 4, bei der der Verbindungsabschnitt (11-3, 13-3) und die Aufnahmeabschnitte (11-1, 11-2, 13-1, 13-2) aus unterschiedlichen Materialien gebildet sind.

6. Vorrichtung nach Anspruch 5, bei der der Verbindungsabschnitt (11-3, 13-3) Polypropylen umfasst, und die Aufnahmeabschnitte (11-1, 13-1; 11-2, 13-2) faserverstärktes Polyamid umfassen.

7. Vorrichtung nach Anspruch 1, bei der der Verbindungsabschnitt (11-3) des Gehäuseunterteils (11) und/oder bei der der Verbindungsabschnitt (13-3) des Gehäusedeckels (13) zumindest eine Abschrägung (15) aufweist, die derart ausgebildet ist, dass ein Ende der Klemme (14) bei einer Relativbewegung eines Aufnahmeabschnitts ausgewählt aus dem ersten und dem zweiten Aufnahmeabschnitt (11-1, 13-1; 11-2, 13-2) in Richtung des anderen ausgewählt aus dem ersten und dem zweiten Aufnahmeabschnitt in Kontakt mit der Abschrägung (15) gelangt und bei Erreichen eines vorgegebenen Abstands zwischen den beiden Aufnahmeabschnitten die Klemme (14) mittels einer von der Abschrägung (15) ausgeübten Kraft gelöst wird.

8. Vorrichtung nach Anspruch 1 oder 7, bei der die Klemme (14) mittels einer Einrastvorrichtung am Verbindungsabschnitt (11-3, 13-3) des Gehäuses (11, 13) befestigt ist.

9. Vorrichtung nach Anspruch 8, bei der der Verbindungsabschnitt (11-3, 13-3) des Gehäusedeckels (13) und/oder des Gehäuseunterteils (11) eines ausgewählt aus einer Einrastnase und einer Einrastnut, und die Klemme (14) das andere ausgewählt aus der Einrastnase und der Einrastnut aufweist, und die Einrastnase in der Einrastnut eingerastet ist.

10. Fahrzeug, insbesondere Kraftfahrzeug, vorzugsweise Hybrid- oder Elektrofahrzeug, mit einer Vorrichtung (10) gemäß einem der vorangehenden Ansprüche.

## Claims

1. A device (10) for accommodating at least one power module for a motor vehicle, especially for accommodating at least one high-voltage power module for a hybrid or electric vehicle, comprising
a housing (11, 13) with a first and a second accommodating portion (11-1, 13-1; 11-2, 13-2) for accommodating at least one power module, wherein the power module can be accommodated in such a way that it is shielded from external environmental influences,
**characterised in that**
the housing (11, 13) has a lower housing part (11), a housing cover (13) and a connection portion (11-3, 13-3),
with the connection portion (11-3, 13-3) connecting the first and second accommodating portion (11-1, 13-1; 11-2, 13-2) together,
the connection portion (11-3, 13-3) comprising a connection portion (11-3) of the lower housing part (11) and a connection portion (13-3) of the housing cover (13) with respective end portions which are pressed on one another in surface-to-surface contact by means of a releasable clamp (14), and
the connection portion (11-3, 13-3) being designed in such a way that
i. it can be arranged over a centre tunnel of the motor vehicle, and
ii. upon application of a predetermined force to the housing with resulting deformation, it permits a specified relative movement, resulting from the deformation, between the first and the second accommodating portion (11-1, 13-1; 11-2, 13-2).

2. A device (10) according to Claim 1, in which a deformation resistance of the accommodating portions (11-1, 13-1; 11-2, 13-2) and a deformation resistance of the connection portion (11-3, 13-3) are selected such that the connection portion (11-3, 13-3) upon application of a predetermined force within a specified range of forces deforms, while the accommodating portion which is moved as a result of the deformation of the connection portion (12) undergoes no, or virtually no, plastic deformation.

3. A device (10) according to Claim 1 or 2, in which the connection portion (11-3, 13-3) has a lesser rigidity than the first and the second accommodating portion (11-1, 13-1; 11-2, 13-2).

4. A device according to one of Claims 1 to 3, in which a wall thickness of the connection portion (11-3, 13-3) is less than a wall thickness of the at least one accommodating portion (11-1, 13-1; 11-2, 13-2).

5. A device according to one of Claims 1 to 4, in which the connection portion (11-3, 13-3) and the accommodating portions (11-1, 11-2, 13-1, 13-2) are formed from different materials.

6. A device according to Claim 5, in which the connection portion (11-3, 13-3) comprises polypropylene, and the accommodating portions (11-1, 13-1; 11-2, 13-2) comprise fibre-reinforced polyamide.

7. A device according to Claim 1, in which the connection portion (11-3) of the lower housing part (11) and/or in which the connection portion (13-3) of the housing cover (13) has at least one chamfer (15) which is formed in such a way that one end of the clamp (14) upon a relative movement of an accommodating portion selected from the first and the second accommodating portion (11-1, 13-1; 11-2, 13-2) in the direction of the other one selected from the first and the second accommodating portion comes into contact with the chamfer (15), and on attaining a specified distance between the two accommodating portions the clamp (14) is released by means of a force exerted by the chamfer (15).

8. A device according to Claim 1 or Claim 7, in which the clamp (14) is fastened to the connection portion (11-3, 13-3) of the housing (11, 13) by means of a latching device.

9. A device according to Claim 8, in which the connection portion (11-3, 13-3) of the housing cover (13) and/or of the lower housing part (11) has one of a latching lug and a latching groove, and the clamp (14) has the other one of the latching lug and the latching groove, and the latching lug is latched into the latching groove.

10. A vehicle, especially a motor vehicle, preferably hybrid or electric vehicle, having a device (10) according to one of the preceding claims.

## Revendications

1. Dispositif (10) de réception d'au moins un module d'énergie destiné à un véhicule, en particulier de réception d'au moins un module d'énergie haute tension destiné à un véhicule hybride ou à un véhicule électrique comportant :
un boîtier (11, 13) comprenant un premier et un second segments de réception (11-1, 13-1, 11-2, 13-2) permettant la réception d'au moins un module d'énergie, ce module d'énergie pouvant être logé de façon à être isolé des influences de l'environnement,
**caractérisé en ce que**
le boîtier (11, 13) comporte une partie inférieure de boîtier (11), un couvercle de boîtier (13) et un segment de liaison (11-3, 13-3),
le segment de liaison (11-3, 13-3) relie le premier et le second segments de réception (11-1, 13-1, 11-2, 13-2),
le segment de liaison (11-3, 13-3) comprend un segment de liaison (11-3) de la partie inférieure du boîtier (11) et un segment de liaison (13-3) du couvercle du boîtier (13) équipés de segments d'extrémité respectifs qui peuvent être appliqués à plat l'un contre l'autre au moyen d'une pince amovible (14), et
le segment de liaison (11-3, 13-3) est réalisé de sorte :
i. qu'il puisse être monté sur un tunnel médian du véhicule, et
ii. que lors de l'application d'une force prédéfinie sur le boîtier, il permette, par déformation un mouvement relatif prédéfini résultant de la déformation entre le premier et le second segments de réception (11-1, 13-1, 11-2, 13-2).

2. Dispositif (10) conforme à la revendication 1,
dans lequel, la résistance à la déformation des segments de réception (11-1, 13-1, 11-2, 13-2) et la résistance à la déformation du segment de liaison (11-3, 13-3) sont choisies de sorte que lors de l'application d'une force prédéfinie située dans une plage de force prédéfinie, le segment de liaison (11-3, 13-3) se déforme tandis que le segment de réception déplacé suite à la déformation du segment de liaison (12) ne subisse aucune ou approximativement aucune déformation plastique.

3. Dispositif (10) conforme à la revendication 1 ou 2,
dans lequel le segment de liaison (11-3, 13-3) a une rigidité inférieure à celle du premier et du second segments de réception (11-1, 13-1, 11-2, 13-2).

4. Dispositif conforme à l'une des revendications 1 à 3,
dans lequel l'épaisseur de paroi du segment de liaison (11-3, 13-3) est inférieure à l'épaisseur de paroi du ou des segment(s) de réception (11-1, 13-1, 11-2, 13-2).

5. Dispositif conforme à l'une des revendications 1 à 4,
dans lequel le segment de liaison (11-3, 13-3) et les segments de réception (11-1, 11-2, 13-1, 13-2) sont réalisés en des matériaux différents.

6. Dispositif conforme à la revendication 5,
dans lequel le segment de liaison (11-3, 13-3) renferme du polypropylène et les segments de réception (11-1, 13-1, 11-2, 13-2) renferment du polyamide renforcé par des fibres.

7. Dispositif conforme à la revendication 1,
dans lequel le segment de liaison (11-3) de la partie inférieure du boîtier (11) et/ou le segment de liaison (13-3) du couvercle du boîtier (13) comporte(nt) au moins un biseau qui est réalisé de sorte que lors d'un mouvement relatif, d'un segment de réception choisi parmi le premier et le second segments de réception (11-1, 13-1, 11-2, 13-2) en direction de l'autre segment de réception une extrémité de la pince (14) vienne en contact avec ce biseau (15), et, que lorsqu'a été atteinte une distance prédéfinie entre les deux segments de réception, la pince (14) soit relâchée au moyen d'une force exercée par le biseau (15).

8. Dispositif conforme à la revendication 1 ou 7,
dans lequel la pince (14) est fixée sur le segment de liaison (11-3, 13-3) du boîtier (11, 13) au moyen d'un dispositif d'encliquetage.

9. Dispositif conforme à la revendication 8,
dans lequel le segment de liaison (11-3, 13-3) du couvercle du boîtier (13) et/ou de la partie inférieure du boîtier (11) comporte un bec d'encliquetage ou une rainure d'encliquetage, et la pince (14) comporte une rainure d'encliquetage ou un bec d'encliquetage, et le bec d'encliquetage est encliqueté dans la rainure d'encliquetage.

10. Véhicule, en particulier véhicule automobile de préférence véhicule hybride ou véhicule électrique équipé d'un dispositif (10) conforme à l'une des revendications précédentes.
